# EUROPÄISCHE PATENTSCHRIFT

(11) **EP 0 687 534 B1**
(45) Veröffentlichungstag und Bekanntmachung des Hinweises auf die Patenterteilung: **07.04.1999**
(21) Anmeldenummer: 95107938.3
(22) Anmeldetag: 24.05.1995
(51) Int. Cl.: B29B 7/74

(54) **Verfahren zur Herstellung von Kautschukmischungen**
Method for making rubber mixtures
Procédé pour la préparation de mélanger de caoutchouc

(30) Priorität: 14.06.1994 DE 4420543
(43) Veröffentlichungstag der Anmeldung: 20.12.1995
(73) Patentinhaber: Continental Aktiengesellschaft, 30165 Hannover (DE); Peter, Julius, Dr., 1130 Wien (AT)
(72) Erfinder: Peter, Julius, Dr., A-1130 Wien (AT)
(74) Vertreter: Depmeyer, Lothar

(56) Entgegenhaltungen:
- EP-A- 0 444 477
- EP-A- 0 472 931
- EP-A- 0 532 855

## Beschreibung

Die Erfindung betrifft ein Verfahren zur Herstellung von Kautschukmischungen, wobei der Kautschuk chargenweise in einem Innenmischer plastiziert und/oder mastiziert und mit nicht reaktiven Zusatzstoffen versehen wird, worauf aus der so entstandenen Grundmischung ebenfalls in einem Innenmischer chargenweise durch Hinzufügen von reaktiven Zusatzstoffen die Fertigmischung erstellt wird.

Ein derartiges Verfahren ist aus der US-A-4,910,237 bekannt.

Bei einem derartigen Verfahren ist es in der ersten Phase zunächst erforderlich, den Kautschuk durch mechanischen Energieintrag so weit zu erwärmen, daß er plastisch und dadurch in die Lage versetzt wird, die zur Entfaltung seiner Eigenschaften erforderlichen Zusatzstoffe, und zwar insb. die hochaktiven Füllstoffe aufzunehmen. In der zweiten Phase erfolgt dann die Beimischung der reaktiven Zusatzstoffe.

Die Erfindung geht von der Erkenntnis aus, dass der überwiegende Teil der Kautschukmischungen, insb. zur Herstellung von Fahrzeugluftreifen, hohe Dosierungen an hochaktiven Füllstoffen enthält ( z.B. Mischungen für Reifenlaufflächen, zur Haftung an Stahl bestimmte Mischungen und Kieselsäuremischungen ) und es zur Herstellung von Grundmischungen, also Mischungen, die noch keine reaktiven Zusatzstoffen enthalten, erforderlich ist, mehrere Mischgänge zu vollziehen, um so plastische, gut verarbeitbare Grundmischungen zu bekommen. Hinzu kommt, dass zur Herstellung von Grundmischungen teure, im Regelfalle mit Weichmachereinspritzpumpen versehene Stempelkneter erforderlich sind, die zur Lagerung, zum Transport und zum Abwiegen der Füllstoffe mit umfangreichen Zusatzeinrichtungen sowie zum Aufarbeiten der häufig noch zähen Grundmischungen mit Austragsextrudern ausgestattet sein müssen.

Demgemäss gliedert sich die eingangs erwähnte erste Phase der Mischungsherstellung ( Herstellung der Grundmischung ) in zwei Verfahrensschritte. Im ersten Schritt wird der Kautschuk durch Kneten erwärmt ( plastiziert ), ggfs. werden homogene Kautschukverschnitte hergestellt bzw. Naturkautschuk wird abgebaut ( mastiziert ). Im zweiten Schritt werden in dem gleichen Innenmischer die hochaktiven Füllstoffe bzw. die nicht reaktiven Zusatzstoffe beigemischt.

Für alle diese Vorgänge benötigt man aber einen in der Anschaffung sehr teuren Grundmischungskneter, um das Plastizieren zur Vermeidung zu grosser thermischer Belastungen und Inhomogenitäten bei relativ geringen Umdrehungsgeschwindigkeiten der Rotoren durchführen zu können.

Der Erfindung liegt nun die Aufgabe zugrunde, ein Verfahren der eingangs erwähnten Art vorzuschlagen, das vergleichsweise einfacher und wirtschaftlicher ist.

Zur Lösung dieser Aufgabe erfolgt erfindungsgemäss das Plastizieren und/oder Mastizieren des Kautschuks in einem ersten Innenmischer, von dem aus der Kautschuk im noch warmen Zustand in einen zweiten Innenmischer überführt wird, in dem dem Kautschuk die nicht reaktiven Zusatzstoffe, insb. die hochaktiven Füllstoffe, einverleibt werden.

Dieses Verfahren hat u.a. den grossen Vorteil, dass der in seiner Anschaffung teure und in seinem Aufbau komplizierte Grundmischungsstempelkneter nicht auch noch das Plastizieren und/oder Mastizieren vollziehen muss, sondern praktisch nur die Aufgabe hat, die nicht reaktiven Zusatzstoffe, insb. aber die hochaktiven Füllstoffe beizumischen.

Zweckmässigerweise erfolgt dabei das Plastizieren und/oder Mastizieren in einer auf den Kautschukgehalt der im zweiten Innenmischer herzustellenden Mischung und das Volumen des zweiten Innenmischers abgestimmten Menge Kautschuk chargenweise im ersten Innenmischer.

Zur Durchführung des erfindungsgemässen Verfahrens werden zwei nacheinander, insb. übereinander angeordnete Innenmischer benutzt, wobei das Plastikat on-line in der Weise von einem zum anderen Innenmischer geführt wird, dass der Kautschuk praktisch nicht erkaltet bzw. praktisch nicht an Plastizität verliert. Das Überführen des Kautschuks kann dabei durch Schwerkraft und/oder Fördermittel, insb. Fördertröge geschehen.

Damit im zweiten Verfahrensschritt des Grundmischens eine grosse Menge an Zusatzstoffen eingebracht werden kann, kommt hier ein Stempelkneter zum Einsatz, während für den ersten Schritt ein Innenmischer benutzt werden kann, der mit oder ohne Stempel ausgerüstet ist.

Die so erhaltene Grundmischung kann anschliesssend als Grundmischung aufgearbeitet, remilled oder direkt zu einer vulkanisationsfähigen Mischung weiterverarbeitet werden.

Weitere Einzelheiten der Erfindung werden anhand der Zeichnung erläutert, in der Ausführungsbeispiele der Erfindung dargestellt sind. Es zeigen :
Fig. 1 eine Anlage zur Herstellung von Kautschukgrundmischungen in schematischer Darstellung in der Ansicht,
Fig. 2 einen Innenmischer in der Ansicht in schematischer Darstellung, und zwar für eine gegenüber Fig. 1 abgewandelte Anlage zur Herstellung von Kautschukmischungen und
Fig. 3 eine weiter abgewandelte Anlage zur Herstellung von Kautschukfertigmischungen in schematischer Darstellung in der Ansicht.

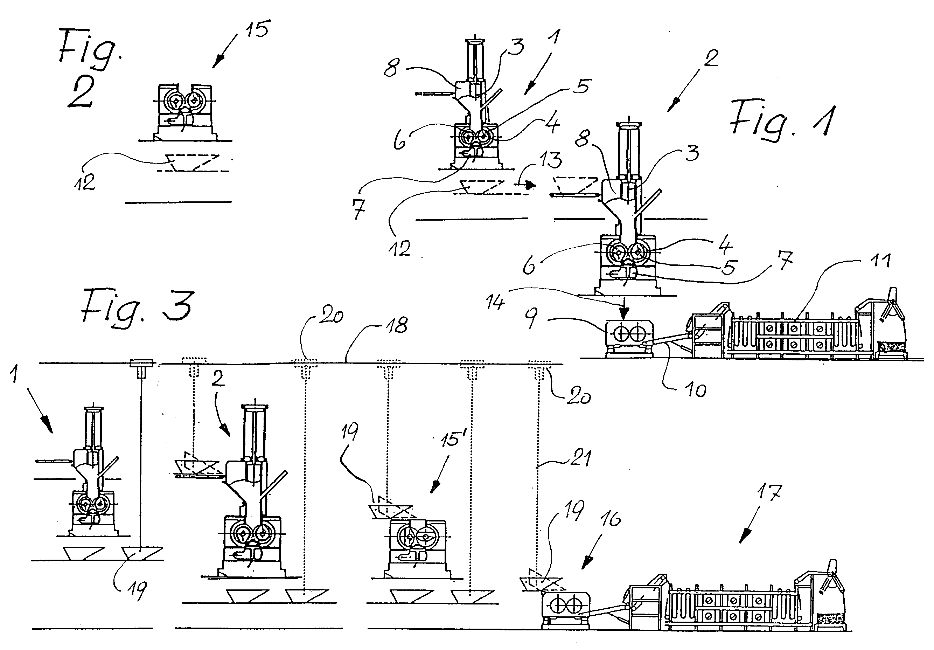

Bei der Anlage gemäss Fig. 1 werden zwei in der Höhe gegeneinander versetzte Stempelkneter 1, 2 (Innenmischer) benutzt, wobei der Stempelkneter 2 tiefer angeordnet ist. Beide Stempelkneter 1, 2 weisen unterhalb der Stempeleinrichtung 3 eine Mischkammer 4 mit hierin angeordneten, gegenläufig drehenden Rotoren 5, 6 auf. Die Mischkammer 4 wird nach unten hin durch einen nach unten hin abklappbaren Sattel 7 abgeschlossen. Die Einfüllöffnung der beiden Stempelkneter 1, 2 ist mit 8 bezeichnet.

Die beiden Stempelkneter 1, 2 sind so bemessen, dass das Nutzvolumen ( effektives Fassungsvermögen ) des Stempelkneters 2 um etwa 5 - 100%, insb. aber um 20 - 50% grösser ist als das Nutzvolumen des Stempelkneters 1.

Unterhalb des Stempelkneters 2 befindet sich ein Walzwerk 9, von dem aus ein Transportband 10 od. dgl. zu einer Batch-off-Anlage 11 führt.

Zur Herstellung der Grundmischung wird der Kautschuk zunächst dem Stempelkneter 1 zugeführt. Hier wird der Kautschuk durch Kneten erwärmt und plastiziert, Naturkautschuk wird dabei mastiziert. Nach Fertigstellung einer Charge wird diese schnell und direkt ohne nennenswerte Abkühlung dem Stempelkneter 2 zugeführt. Dazu dient ein Trog 12, der in Richtung des Pfeiles 13 zur Einfüllöffnung 8 des Stempelkneters 2 bewegbar ist. Es versteht sich, dass der Trog 12 nach Möglichkeit durch eine Kippbewegung entleerbar sein sollte. Mit der Aufnahme der Behandlung im Stempelkneter 2 werden seiner Mischkammer 4 die gewünschten nicht reaktiven Füllstoffe bzw. hochaktive Füllstoffe zugeführt.

Mit der Behandlung im Stempelkneter 2 wird der Stempelkneter 1 mit einer neuen Charge beaufschlagt, um so beide Stempelkneter 1, 2 gleichzeitig wirken zu lassen.

Die fertige Grundmischung verlässst den Stempelkneter 2 im Sinne des Pfeiles 14, sie gelangt auf das Walzwerk 9 und schliesslich in die Batch-Off-Anlage 11. Von dort kann die Grundmischung mit bekannten Mitteln einem Fertigmischprozess unterworfen werden.

Um hochaktive Füllstoffe einverleiben zu können, muss der Stempelkneter 2 mit einem Stempel ausgerüstet sein, während der Stempelkneter 1 durch den in Fig. 2 wiedergegebenen stempellosen Innenmischer 15 ersetzt werden kann. Dieser Tausch ist möglich, weil im ersten Schritt des Grundmischens kein Beimischen von Füllstoffen od. dgl., sondern nur ein Plastizieren bzw. Mastizieren stattfindet.

Die Anlage gemäss Fig. 3 ermöglicht ein weiteres Remillen der Grundmischung, den Zusatz eines Teiles der reaktiven Stoffe oder die Herstellung einer Fertigmischung. Im Sinne der Anlage gemäss Fig. 1 werden hier die Stempelkneter 1, 2 ebenfalls zur Fertigung der Grundmischung benutzt; der zusätzlich noch vorgesehene stempellose Innenmischer 15 dient indessen zum Remillen oder zum Beimischen der reaktiven Zusatzstoffe. Diesem stempellosen Innenmischer 15' folgt ein Walzwerk 16, und diesem wiederum eine Batch-Off-Anlage 17.

Eine Besonderheit dieser Anlage besteht auch darin, dass eine zweckmässigerweise umlaufende, endlose Förderstrecke 18 benutzt wird, an der laufkatzenartig Fördertröge 19 heb- und senkbar angeordnet und geführt sind. Die an der Förderstrecke 18 ( Laufschiene od. dgl. ) gelagerten Wagen sind mit 2o bezeichnet, die vorzugsweise auch mit einem Hubwerk zum Heben und Senken der Fördertröge 19 ausgestattet sein sollten; die Tragstränge sind mit 21 bezeichnet. Eine solche Förderanlage als Verbindungselement zwischen den Stationen der Anlage ist besonders einfach und sicher; sie ist auch mit einfachen Mitteln zum Kippen der Fördertröge 19 auszubilden. Um Verunreinigungen der Fördereinrichtung weitgehend auszuschalten, sollten die Fördertröge 19 bzw. 12 innen mit einer haftungsabweisenden, z.B. aus Teflon oder Siliconharz bestehenden Schicht versehen sein. Vorteilhaft ist es ferner, wenn der Austritt der Fördertröge 19 bzw. 12 so eng bzw. so klein bemessen wird, dass der Austritt kleiner ist als die Eintrittsöffnung der zu beschickenden Innenmischer insb. der stempellosen Innenmischer. Dadurch wird eine saubere, die Qualität der Mischung steigernde Überführung vom Fördermittel zum Kneter bzw. Innenmischer erreicht.

Es sei erwähnt, dass die zur Anwendung kommenden stempellosen Innenmischer mit einer Klappe im Bereich ihrer Einfüllöffnung versehen werden können; sie hat die Aufgabe, eine unnötige Anhäufung des Mischgutes im sog. Zwickel der Mischkamnmer auszuschalten bzw. zu reduzieren und kann daher auch mit einem oder mehreren Vorsprüngen versehen sein, die in den Zwickel zwischen den beiden Rotoren des Innenmischers hineinreichen. Diese Klappe kann - auch in abgewandelter Form - durch eine Bewegung in Richtung auf die Mischkammer eine stopfende Wirkung ausüben ( Ausrüstung mit einer Stopfvorrichtung ).

Die Erfindung schliesst nicht aus, dass vor Beginn des ersten Schrittes bei der Grundmischung der Kautschuk zerkleinert und mit Abbaumitteln und/oder mit vorzugsweise geringfügigen Anteilen der hochaktiven Füllstoffe versetzt wird, um so eine Vorverteilung der Zusatzstoffe bzw. Füllstoffe vornehmen zu können.

In Abwandlung der Anlage gemäss Fig. 3 kann diese auch ohne den stempellosen Innenmischer 15' benutzt werden, wobei dann die Grundmischung - der Fig. 1 entsprechend - vom Stempelkneter 2 aus dem Walzwerk 16 zuzuführen wäre.

## Patentansprüche

1. Verfahren zur Herstellung von Kautschukmischungen, wobei der Kautschuk chargenweise in einem Innenmischer plastiziert und/oder mastiziert und mit nicht reaktiven Zusatzstoffen versehen wird, worauf aus der so entstandenen Grundmischung ebenfalls in einem Innenmischer chargenweise durch Hinzufügen von reaktiven Zusatzstoffen die Fertigmischung erstellt wird, dadurch gekennzeichnet, daß das Plastizieren und/oder Mastizieren chargenweise in einem ersten Innenmischer (1) erfolgt, von dem aus der Kautschuk im noch warmen Zustand in einen zweiten Innenmischer (2) überführt wird, in dem dem Kautschuk die nicht reaktiven Zusatzstoffe, insb. die hochaktiven Füllstoffe, einverleibt werden.

2. Verfahren nach Anspruch 1, dadurch gekennzeichnet, daß der Kautschuk vor dem Einbringen in den ersten Innenmischer (1) zerkleinert wird.

3. Verfahren nach Anspruch 2, dadurch gekennzeichnet, daß dem zerkleinerten Kautschuk Abbaumittel und/oder vorzugsweise geringfügige Anteile der nicht reaktiven Zusatzstoffe zu deren Vorverteilung hinzugefügt werden.

4. Verfahren nach Anspruch 1 zur Herstellung von Kautschukmischungen für die Fertigung von Fahrzeugluftreifen.

5. Verfahren nach Anspruch 1, dadurch gekennzeichnet, daß die Innenmischer (1, 2) arbeitsmäßig derart aufeinander abgestimmt sind, daß deren Arbeitszyklen praktisch gleich lang sind.

6. Verfahren nach Anspruch 1, dadurch gekennzeichnet, daß das Plastizieren und/oder Mastizieren in einer auf den Kautschukgehalt der im Zweiten Innenmischer (2) herzustellenden Mischung und das Volumen des zweiten Innenmischers (2) abgestimmten Menge Kautschuk chargenweise im ersten Innenmischer (1) erfolgt.

7. Vorrichtung zur Herstellung von Kautschukmischungen, mit einer ersten Einrichtung zur Herstellung einer Kautschuk-Grundmischung durch Plastizieren und/oder Mastizieren des Kautschuks und durch Einbringen der nicht reaktiven Zusatzstoffe, und einer Zweiten Einrichtung zum Herstellen einer Fertigmischung aus der Grundmischung durch Hinzufügen von reaktiven Zusatzstoffen zur Grundmischung, wobei beide Einrichtungen Innenmischer aufweisen, dadurch gekennzeichnet, daß die erste Einrichtung einen ersten Innenmischer (1) zum Plastizieren und/oder Mastizieren des Kautschuks und einen zweiten Innenmischer (2) zum Einbringen der reaktiven Zusatzstoffe in den Kautschuk aufweist, wobei der zweite Innenmischer (2) ein Stempelkneter ist.

8. Vorrichtung nach Anspruch 7, dadurch gekennzeichnet, daß der erste Innenmischer (1) ein stempelloser Innenmischer (15) ist.

9. Vorrichtung nach Anspruch 8, dadurch gekennzeichnet, daß der stempellose Kneter (1) im Bereich seiner Einfüllöffnung (8) eine Klappe aufweist, die mit einem oder mehreren Vorsprüngen versehen ist, welche in den Zwickel zwischen den beiden Rotoren (5, 6) der Mischkammer (4) hineinragen.

10. Vorrichtung nach Anspruch 8, dadurch gekennzeichnet, daß der stempellose Kneter (1) im Bereich seiner Einfüllöffnung (8) eine in Richtung auf die Mischkammer (4) wirkende Stopfeinrichtung für die Kautschukmischung aufweist.

11. Vorrichtung nach Anspruch 7, dadurch gekennzeichnet, daß der erste Innenmischer (1) ein Stempelkneter ist.

12. Vorrichtung nach Anspruch 7, dadurch gekennzeichnet, daß der zweite Innenmischer (2) im Vergleich zum ersten Innenmischer (1) ein um 5 - 100%, insb. ein um 20 - 50% größeres Nutzvolumen aufweist.

13. Vorrichtung nach Anspruch 7, dadurch gekennzeichnet, daß zwischen dem ersten Innenmischer (1) und dem zweiten Innenmischer (2) eine vorzugsweise umlaufende Fördereinrichtung für den Kautschuk vorgesehen ist, die mit einem oder mehreren Fördertrögen (12, 19) zur Aufnahme des Kautschuks versehen ist.

14. Vorrichtung nach Anspruch 13, dadurch gekennzeichnet, daß die Fördertröge (19) heb- und senkbar und vorzugsweise auch kippbar an einem laufkatzenähnlichen Führungsmittel (20) der Fördereinrichtung aufgehängt sind.

15. Vorrichtung nach Anspruch 13, dadurch gekennzeichnet, daß die Fördertröge (12, 19) innen eine haftungsabweisende Beschichtung aufweisen.

16. Vorrichtung nach Anspruch 13, dadurch gekennzeichnet, daß der Austritt der Fördertröge (12, 19) kleiner insb. schmaler ist als die Einfüllöffnung der Innenmischer (1, 2).

## Claims

1. Method of producing rubber mixtures, the rubber being plasticised and/or masticated chargewisely in an internal mixer and provided with non-reactive additives, whereupon the final mixture is also chargewisely produced, from the master batch thus created, in an internal mixer by adding reactive additives, characterised in that the plasticising and/or masticating processes are/is effected chargewisely in a first internal mixer (1), from which the rubber, still in the warm state, is transferred into a second internal mixer (2), in which the non-reactive additives, more especially the highly active filler substances, are incorporated in the rubber.

2. Method according to claim 1, characterised in that the rubber is comminuted prior to being introduced into the first internal mixer (1).

3. Method according to claim 2, characterised in that reducing agents and/or preferably minimal proportions of the non-reactive additives are added to the comminuted rubber for the preliminary distribution thereof.

4. Method according to claim 1 for producing rubber mixtures for the manufacture of pneumatic vehicle tyres.

5. Method according to claim 1, characterised in that the internal mixers (1, 2) are operationally adapted to each other in such manner that their operational cycles are practically the same length.

6. Method according to claim 1, characterised in that the plasticising and/or masticating processes are/is effected chargewisely in the first internal mixer (1) in a quantity of rubber adapted to the rubber content of the mixture to be produced in the second internal mixer (2) and to the volume of the second internal mixer (2).

7. Apparatus for producing rubber mixtures, having a first arrangement for producing a rubber master batch by plasticising and/or masticating the rubber and by introducing the non-reactive additives, and a second arrangement for producing a final mixture from the master batch by adding reactive additives to the master batch, both arrangements including internal mixers, characterised in that the first arrangement includes a first internal mixer (1) for plasticising and/or masticating the rubber and a second internal mixer (2) for introducing the reactive additives into the rubber, the second internal mixer (2) being a ram-type masticator.

8. Apparatus according to claim 7, characterised in that the first internal mixer (1) is a ramless internal mixer (15).

9. Apparatus according to claim 8, characterised in that the ramless masticator (1) has, in the region of its filler aperture (8), a flap which is provided with one or more projections, which protrude into the wedge between the two rotors (5, 6) of the mixing chamber (4).

10. Apparatus according to claim 8, characterised in that the ramless masticator (1) has, in the region of its filler aperture (8), a charging arrangement for the rubber mixture which operates in the direction of the mixing chamber (4).

11. Apparatus according to claim 7, characterised in that the first internal mixer (1) is a ram-type masticator.

12. Apparatus according to claim 7, characterised in that the second internal mixer (2) has a useful volume greater by 5 - 100 %, more especially by 20 - 50 %, compared with the first internal mixer (1).

13. Apparatus according to claim 7, characterised in that a preferably circulatory conveyor means for the rubber is provided between the first internal mixer (1) and the second internal mixer (2), said conveyor arrangement being provided with one or more conveyor troughs (12, 19) for accommodating the rubber.

14. Apparatus according to claim 13, characterised in that the conveyor troughs (19) are suspended from a crane-like guide means (20) of the conveyor arrangement so as to be raisable and lowerable and, preferably, also pivotable.

15. Apparatus according to claim 13, characterised in that the conveyor troughs (12, 19) have a non-stick coating internally.

16. Apparatus according to claim 13, characterised in that the outlet of the conveyor troughs (12, 19) is smaller, more especially narrower, than the filler aperture of the internal mixers (1, 2).

## Revendications

1. Procédé pour fabriquer des mélanges de caoutchouc, le caoutchouc étant plastifié et/ou mastiqué par lots dans un mélangeur interne et étant additionné d'additifs non-réactifs, et, à partir du mélange de base ainsi obtenu, et également dans un mélangeur interne, on prépare le mélange fini d'une manière discontinue par addition d'additifs réactifs, caractérisé en ce que la plastification et/ou le masticage s'effectuent par lots dans un premier mélangeur interne (1), à partir duquel le caoutchouc, dans un état encore chaud, est transféré dans un deuxième mélangeur interne (2), il est incorporé au caoutchouc les additifs non-réactifs, en particulier les charges à haute activité.

2. Procédé selon la revendication 1, caractérisé en ce que le caoutchouc est fragmenté avant de pénétrer dans le premier mélangeur interne (1).

3. Procédé selon la revendication 2, caractérisé en ce qu'on ajoute au caoutchouc fragmenté des agents de dégradation et/ou des proportions de préférence petites des additifs non-réactifs, pour en permettre une pré-répartition.

4. Procédé selon la revendication 1, pour fabriquer des mélanges de caoutchouc destinés à la fabrication de pneumatiques pour véhicules.

5. Procédé selon la revendication 1, caractérisé en ce que les mélangeurs internes (1, 2), pour ce qui est de leur fonctionnement, sont adaptés l'un à l'autre de façon que leurs cycles de travail aient pratiquement la même durée.

6. Procédé selon la revendication 1, caractérisé en ce que la plastification et/ou le masticage ont lieu d'une manière discontinue dans le premier mélangeur interne (1), en une quantité de caoutchouc adaptée à la teneur en caoutchouc du mélange devant être fabriqué dans le deuxième mélangeur interne (2), et au volume du deuxième mélangeur interne (2).

7. Equipement pour fabriquer des mélanges de caoutchouc, comportant un premier dispositif pour fabriquer un mélange de base de caoutchouc par plastification et/ou masticage du caoutchouc et par introduction des additifs non-réactifs, et un deuxième dispositif pour fabriquer un mélange fini à partir du mélange de base, par addition d'additifs réactifs au mélange de base, les deux dispositifs comportant des mélangeurs internes, caractérisé en ce que le premier dispositif comporte un premier mélangeur interne (1) pour plastifier et/ou mastiquer le caoutchouc et un deuxième mélangeur interne (2) pour introduire les additifs réactifs dans le caoutchouc, le deuxième mélangeur interne (2) étant un malaxeur à piston.

8. Equipement selon la revendication 7, caractérisé en ce que le premier mélangeur interne (1) est un mélangeur interne (15) sans piston.

9. Equipement selon la revendication 8, caractérisé en ce que le malaxeur (1) sans piston comporte dans la zone de son orifice de remplissage (8) un volet qui est pourvu d'une ou plusieurs saillies, qui pénètrent dans l'encoignure située entre les deux rotors (5, 6) de la chambre de mélange (4).

10. Equipement selon la revendication 8, caractérisé en ce que le malaxeur (1) sans piston comporte dans la zone de son orifice de remplissage (8) un dispositif d'obturation, agissant dans la direction allant vers la chambre de mélange (4), pour le mélange de caoutchouc.

11. Equipement selon la revendication 7, caractérisé en ce que le premier mélangeur (1) est un malaxeur à piston.

12. Equipement selon la revendication 7, caractérisé en ce que le deuxième mélangeur interne (2) a un volume utile qui est de 5 à 100 % et en particulier de 20 à 50 % supérieur à celui du premier mélangeur interne (1).

13. Equipement selon la revendication 7, caractérisé en ce qu'on prévoit entre le premier mélangeur interne (1) et le deuxième mélangeur interne (2) un dispositif de transport pour le caoutchouc, de préférence tournant, qui est pourvu, pour reprendre le caoutchouc, d'une ou plusieurs cuves de transport (12, 19).

14. Equipement selon la revendication 13, caractérisé en ce que les cuves de transport (19) sont suspendues de façon à pouvoir être levées et abaissées, et de préférence aussi basculées sur un moyen de guidage (20), analogue à des chariots roulants, du dispositif de transport.

15. Equipement selon la revendication 13, caractérisé en ce que les cuves de transport (12, 19) comportent sur leur surface intérieur un revêtement anti-adhérent.

16. Equipement selon la revendication 13, caractérisé en ce que l'orifice de sortie des cuves de transport (12, 19) est plus petit et en particulier plus étroit que l'orifice de chargement des mélangeurs internes (1, 2).
